# EUROPEAN PATENT SPECIFICATION

(11) **EP 3 991 114 B1**
(45) Date of publication and mention of the grant of the patent: **28.05.2025**
(21) Application number: 20743472.1
(22) Date of filing: 29.06.2020
(51) Int. Cl.: G06Q 10/08, B25H 3/02, G06F 16/583, H04N 7/18, G06Q 10/087

(54) **MANAGING OBJECTS WITH ASSIGNED STATUS IN AN AUTOMATED TOOL CONTROL SYSTEM**
VERWALTUNG VON OBJEKTEN MIT EINEM ZUGEWIESENEN STATUS IN EINEM AUTOMATISCHEN WERKZEUGSTEUERUNGSSYSTEM
GESTION D'OBJETS AVEC STATUT ATTRIBUÉ DANS UN SYSTÈME AUTOMATISÉ DE COMMANDE D'OUTILS

(30) Priority: 28.06.2019 US 201962868818 P
(43) Date of publication of application: 04.05.2022
(73) Proprietor: Snap-on Incorporated, Kenosha, WI 53141-1410 (US)
(72) Inventor: FLY, David C., Maumelle, Arkansas 72113 (US); LIPSEY, Matthew J., Sherwood, Arkansas 72120 (US); PHILLIPS, Preston C., Conway, Arkansas 72032 (US); NEWPORT, Jason, Conway, Arkansas 72034 (US); LOBO, Andrew R., Wadsworth, Illinois 60083 (US); CHWAN, Joseph, Mechanicsburg, Pennsylvania 17050 (US); ROGERS, Frederick J., North Little Rock, Arkansas 72108 (US); RYAN, Sean W., Pleasant Prairie, Wisconsin 53158 (US)
(74) Representative: Müller-Boré & Partner Patentanwälte PartG mbB
(86) International application number: PCT/US2020/040141
(87) International publication number: WO 2020/264506

(56) References cited:
- US-A1- 2018 232 577

## Description

### Cross-Reference to Related Application

This application claims the benefit of U.S. Provisional Application No. 62/868,818, filed on June 28, 2019, in the U.S. Patent and Trademark Office.

### Technical Field

The present subject matter relates to automated tool control systems, and to techniques and equipment to manage objects in automated tool control systems.

### Background

When tools are used in a manufacturing or service environment, it is important to monitor tool status. In the aerospace industry, for instance, it is important to ensure that tools are properly maintained to perform precise and accurate manufacturing, assembly, or repairing of aircraft or missile parts. However, tools may experience breakage, out of calibration conditions, and other failures requiring inspection, repair, calibration, or replacement of the tools. It is important to efficiently remove the tools experiencing some types of failures from the worksite and take actions needed to return the tools to the worksite.

Currently, the process of removing tools needing maintenance from the worksite, repairing the tools, and returning the tools to the worksite rely on manual methods. For instance, when a user notices that a tool is broken, the user may order repair of the tool. A repair person may pick up the tool for repair from the worksite. However, if the user is not there to hand the repair person the tool and also if the user fails to share that the information about the repair with his or her colleagues, a wrong tool may be picked up by the repair person causing a delay in the repair process.

Normally, there are multiple entities involved in processing repairs on tools. For example, the person picking tools for repair from worksites may be different from the person performing the actual repair on the tools. Further, the person returning the repaired tools to the worksites may be different from either of the two persons involved in the repair process. A delay in communication amongst the people involved in the repair process also leads to delay in the repair process. Miscommunication amongst the people involved in the repair process may lead to further delay in the repair process.

As such, manual methods for managing the repair processes are prone to delays resulting in inefficiencies. Managing the repair processes has logistical challenges, but relying on manual methods may further result in higher costs, lost times, and excessive waste.

US 2018/232577 A1 describes an asset management system that automatically generates and updates tool data stored in and used by the system for determining the presence or absence of tools or other inventory objects in the systems. The tool data can be automatically generated when a tool is newly added to the automated asset management system, and can be updated if and when characteristics of the tool and/or automated asset management system change. The automatic generation and updating includes automatically recognizing unique identifiers of tags located on inventory objects, automatically identifying an inventory object to associate with each unique identifier, and automatically populating a database to store each unique identifier in association with stored data for the corresponding inventory object.

Accordingly, there is a need for an improved system that enables efficiently removing items from worksites, processing necessary steps as required, and returning the items to the worksites.

The underlying technical problem is solved by the subject-matter according to the independent claims. Additional embodiments are defined in the dependent claims.

### Description

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and/or circuitry have been described at a relatively high-level, without detail, in order to avoid unnecessarily obscuring aspects of the present teachings.

To address the issues described in the Background, automated tool control systems have been developed which automatically manage objects, such as tools, according to the status assigned to the object. The various systems and methods disclosed herein relate to automated tool control systems used which manage objects with assigned status.

Reference now is made in detail to the examples illustrated in the accompanying drawings and discussed below.

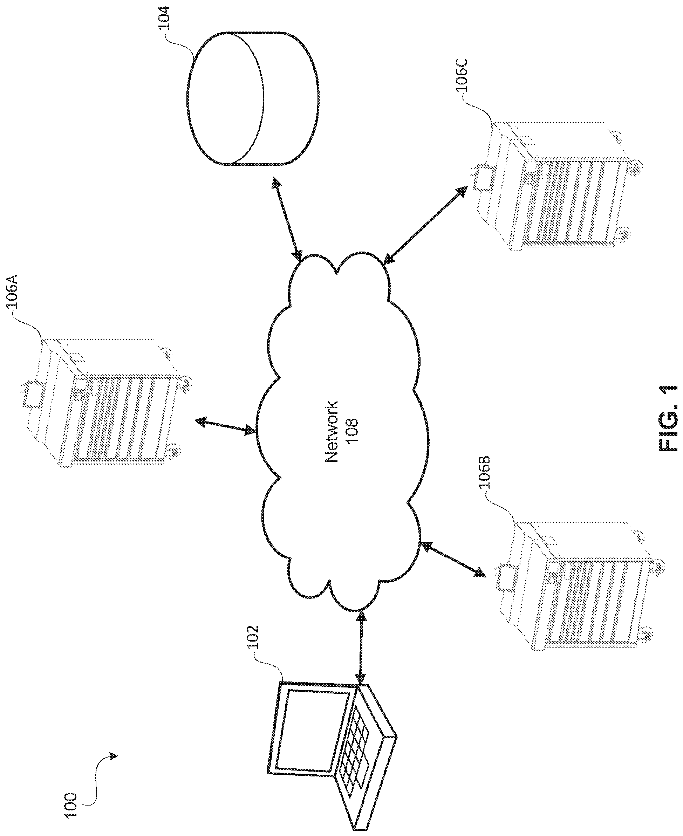

FIG. 1 illustrates an exemplary automated tool control system 100 according to example aspects of the subject technology. The automated control system 100 includes a computing device 102, a database 104, tool control storage devices 106A, 106B, and 106C (hereinafter collectively referred to as "tool control storage devices 106"), and a network 108. In some aspects, the automated control system 100 can have more or fewer computing devices (e.g., 102), databases (e.g., 104), and/or tool control storage devices (e.g., 106A, 106B, and 106C) than those shown in FIG. 1.

The computing device 102 can represent various forms of processing devices that have a processor, a memory, and communications capability. The processor may execute computer instructions stored in memory. The computing device 102 is configured to communicate with the database 104 and the tool control storage devices 106 via the network 108. By way of non-limiting example, processing devices can include a desktop computer, a laptop computer, a handheld computer, a personal digital assistant (PDA), or a combination of any of these processing devices or other processing devices.

The computing device 102 may have applications installed thereon. For example, the applications may include an administrative client software application for automatically controlling and managing the identifications of tools, the locations of the tools, and status of the tools. In some embodiments, the administrative client software application may be used to manipulate and store data and store and display information relative to the data to system users.

The administrative client software application may associate an identification (ID) to the tools. For example, when a tool is added to the automated tool control system, the tool may be assigned an ID. The system administrator may assign an ID to the tool or the automated tool control system may auto-generate an ID and assign the ID to the tool. As will be described below in further detail, the administrative client software application may track the locations of the tools and status of the tools based on the data from the tool control storage devices 106.

The database 104 is a data storage for storing data associated with tools in the automated tool control system and the system users. The database 104 may store data associated with the locations and statuses of the tools.

The tool control storage devices 106 (i.e., 106A, 106B, and 106C) each has a processor, a memory, and communications capability. The processor may execute computer instructions stored in memory. The tool control storage device 106 has a data link, such as a wired or wireless link, for exchanging data with the administrative client software application on the computing device 102 and the database 104. The tool control storage devices 106 transfer and receive data to and from the database 104 via the network.

The tool control storage device 106 is a toolbox in some embodiments. The tool control storage devices 106 may more generally be tool lockers or any other secure storage devices or enclosed secure storage areas (e.g., a tool crib or walk-in tool locker). Each of the tool control storage devices 106 is an example of a highly automated inventory control system that utilizes multiple different sensing technologies for identifying inventory conditions of objects in the storage unit. In one example, the tool control storage devices 106 use machine imaging or RF sensing methodologies for identifying inventory conditions of objects in the storage unit.

Illustrative features include the ability to process complex image data with efficient utilization of system resources, autonomous image and camera calibrations, identification of characteristics of tools from image data, adaptive timing for capturing inventory images, efficient generation of reference data for checking inventory status, autonomous compensation of image quality, etc. Further features include the ability to emit and receive RF sensing signals such as RF identification (RFID) signals, to process the received signals to identify particular tools, and to cross-reference tool information obtained through the multiple different sensing modalities (e.g., camera and RFID based modalities) to provide advanced features.

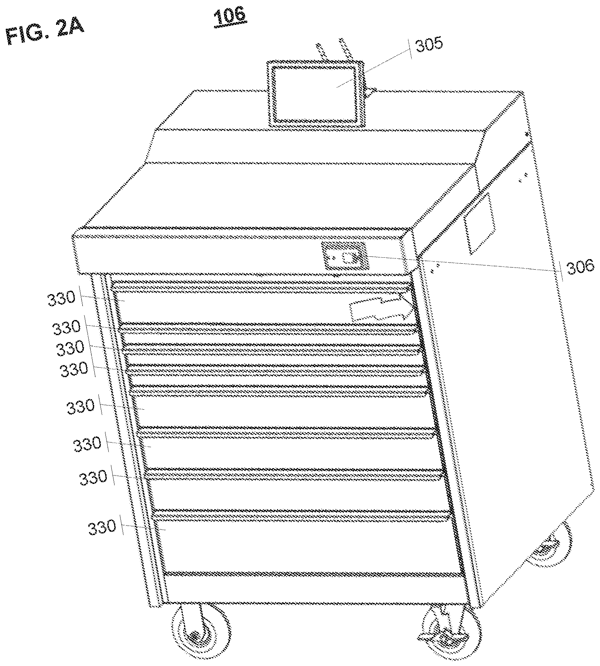

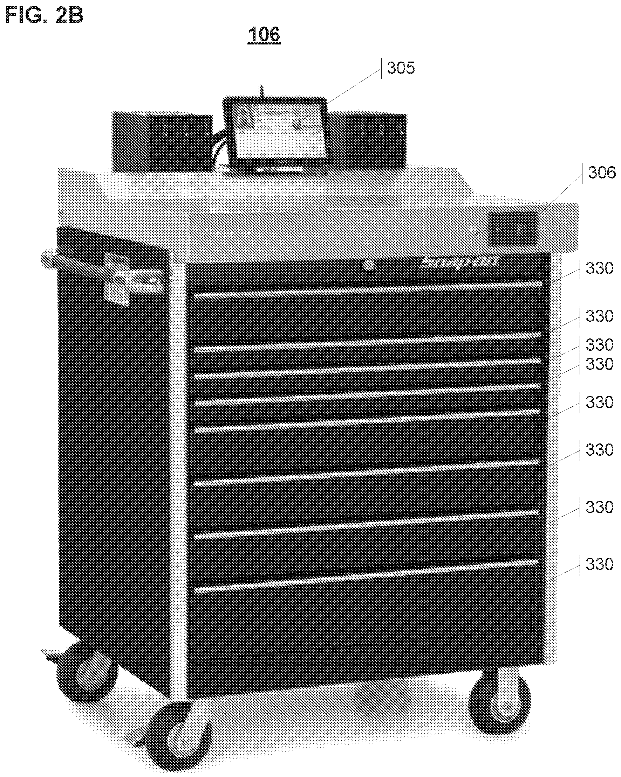

Figures 2A and 2B illustrate various exemplary tool control storage devices 106. The tool control storage device 106 includes a user interface 305, an access control device 306, such as a card reader, for verifying identity and authorization levels of a user intending to access tool control storage device 106, and multiple tool storage drawers 330 for storing tools. Instead of drawers 330, the storage system may include shelves, compartments, containers, or other object storage devices from which tools or objects are issued and/or returned, or which contain the storage device from which the objects are issued and/or returned. In further examples, the storage system includes storage hooks, hangers, toolboxes with drawers, lockers, cabinets with shelves, safes, boxes, closets, vending machines, barrels, crates, and other material storage means.

User interface 305 is an input and/or output device of the tool control storage device 106, configured to display information to a user. Information may include work instructions, tool selection, safety guidelines, torque settings, system and tool status alerts and warnings. For instance, the user interface 305 may be configured to display the information in text strings and images in the default language assigned to the user who currently has access to the tool control storage device 106. Although not illustrated in Figures 2A and 2B, the tool control storage device 106 may include speakers as another output device of the tool control storage device 106 for outputting the information.

The access control device 306 authenticates a user's authorization for accessing automated tool control system 100. Specifically, the access control device 306 is used to limit or allow access to the tool storage drawers 330. The methods and systems used to electronically identify the user requesting access may include any one or more of the following technologies, and others not mentioned, individually or in combination: RFID proximity sensors with cards; magstripe cards and scanners; barcode cards and scanners; common access cards and readers; biometric sensor ID systems, including facial recognition, fingerprint recognition, handwriting analysis, iris recognition, retinal scan, vein matching, voice analysis, and/or multimodal biometric systems.

The access control device 306, through the use of one or more electronically controlled locking devices or mechanisms, keeps some or all the storage drawers 330 locked in a closed position until access the control device 306 authenticates a user's authorization for accessing the tool control storage device 106. If access control device 306 determines that a user is authorized to access the tool control storage device 106, it unlocks some or all of the storage drawers 330, depending on the user's authorization level, allowing the user to remove or replace tools. In particular, the access control device 306 may identify predetermined authorized access levels to the system, and allow or deny physical access by the user to the three dimensional space or object storage devices based on those predetermined authorized levels of access.

The tool control storage device 106 includes several different sensing subsystems. In an illustrative example, the tool control storage device 106 includes a first sensing subsystem in the form of an image sensing subsystem configured to capture images of contents or storage locations of the system. The image sensing subsystem may include lens-based cameras, CCD cameras, CMOS cameras, video cameras, or any types of device that captures images. The tool control storage device 106 may further include a second sensing subsystem that, in one example, takes the form of an RFID sensing subsystem including one or more RFID antennas, RFID transceivers, and RFID processors. The RFID sensing subsystem is configured to emit RF sensing signals, receive RFID signals returned from RFID tags mounted on or incorporated in tools or other inventory items in response to the RF sensing signals, and process the received RFID signals to identify individual tools or inventory items.

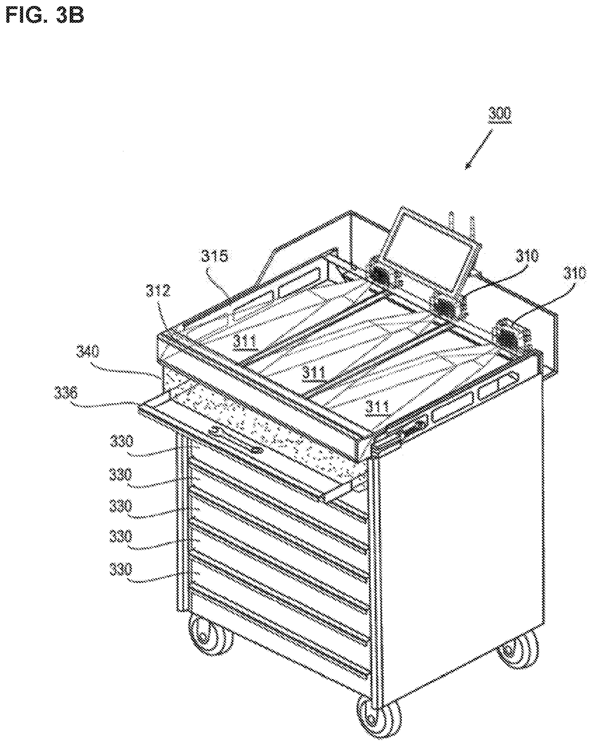

The image sensing subsystem is described in further detail below in relation to FIG. 3B. While FIG. 3B corresponds to the specific embodiment of the tool control storage device 106 shown in FIG. 1, the teachings illustrated in FIG. 3B can be applied to each of the embodiments of FIG. 1. The RFID sensing subsystem may be configured to sense RFID tags of tools located in all the storage drawers 330 of the tool control storage device 106, or configured to sense RFID tags of tools located in a particular subset of the drawers 330 of the tool control storage device 106. In one example, the RFID sensing subsystem is configured to sense RFID tags of tools located only in the top-most and bottom-most drawers 330 of tool control storage device 106, and the RFID sensing subsystem includes RFID antennas disposed directly above the top-most and bottom-most drawers 330 within tool control storage device 106 to sense RFID tags of tools located in those drawers. Other configurations of RFID antennas can also be used.

The tool control storage device 106 further includes a data processing system, such as a computer, for processing images captured by the image sensing device, for processing RFID signals captured by the RFID antennas and transceivers, and/or for processing other sensing signals received by other sensing subsystems. The data processing system includes one or more processors (e.g., micro-processors) and memory storing program instructions for causing the tool control storage device 106 to communicate electronically directly or through a network with sensing devices and obtain data from sensing devices relative to the presence or absence data of objects within the three dimensional space or object storage device. Images, RFID signals, and other sensing signals captured or received by the sensing subsystems are processed by the data processing system for determining an inventory condition of the system or each storage drawer. The term inventory condition as used throughout this disclosure means information relating to an existence/presence or non-existence/absence condition of objects in the storage system.

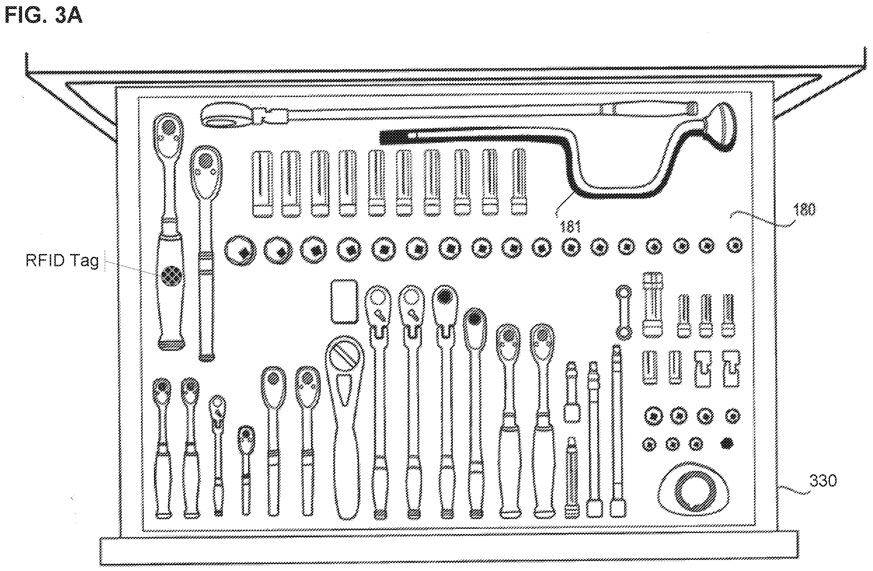

FIG. 3A shows a detailed view of one drawer 330 of the tool control storage device 106 in an open position. In some embodiments, each storage drawer 300 includes a foam base 180 having a plurality of storage locations, such as tool cutouts 181, for storing tools. Each cutout is specifically contoured and shaped for fittingly receiving a tool with corresponding shapes. Tools may be secured in each storage location by using hooks, Velcro, latches, pressure from the foam, etc.

In general, each storage drawer 330 includes multiple storage locations for storing various types of tools. As used throughout this disclosure, a storage location is a location in a storage system for storing or securing objects. In one embodiment, each tool has a specific pre-designated storage location in the tool storage system. Further, one or more tools in the drawer 330 may have an RFID tag mounted or attached thereon.

FIG. 3B shows a perspective view of an imaging subsystem in the tool control storage device 106 according to an embodiment. As illustrated in FIG. 3B, the tool control storage device 106 includes an imaging compartment 315 which houses an image sensing subsystem comprising three cameras 310 and a light directing device, such as a mirror 312 having a reflection surface disposed at about 45 degrees downwardly relative to a vertical surface, for directing light reflected from the drawers 330 to the cameras 310. The directed light, after arriving at the cameras 310, allows the cameras 310 to form images of the drawers 330. The shaded area 340 below the mirror 312 represents a viewing field of the imaging sensing subsystem of the tool control storage device 106. As shown at 340, the imaging subsystem scans a portion of an open drawer 336 that passes through the field of view of the imaging sensing subsystem, for example as the drawer 336 is opened and/or closed. The imaging subsystem thereby captures an image of at least that portion of the drawer 336 that was opened. Processing of the captured image is used to determine the inventory conditions of tools and/or storage locations in the portion of the drawer 336 that was opened.

In general, the image sensing subsystem captures an image of a particular drawer 330 and performs an inventory of the drawer in response to detecting movement of the particular drawer. For example, the image sensing subsystem may perform an inventory of the drawer in response to detecting that the drawer is closing or has become completely closed. In other examples, the image sensing subsystem may image the drawer both as it is opening and as it closes.

The RF sensing subsystem is generally configured to perform inventory checks of drawers or shelves having RF-based tags associated therewith. The RF-based tags may be RFID tags that are attached to or embedded within the tools. In general, the RF-based tag encodes an identifier unique to the tool, such that both the tool type (e.g., screwdriver, torque wrench, or the like) and the unique tool (e.g., a particular torque wrench, from among a plurality of torque wrenches of the model and type) can be identified from reading the RF-based tag. In particular, the information encoded in the RF-based tag is generally unique to the tool such that it can be used to distinguish between two tools that are of a same type, same model, same age, same physical appearance, etc.

The RF sensing system includes antennas mounted in or around the tool control storage device 106. In general, the antennas may be mounted inside the tool control storage device 106 and be configured to only detect the presence of RF-based tags that are located within the tool control storage device 106 (or other defined three dimensional space). In some examples, each antenna may be mounted so as to only detect the presence of RF-based tags that are located within a particular drawer or compartment of the tool control storage device 106, and different antennas may be associated with and mounted in different drawers or compartments. In further embodiments, some antennas may further be configured to detect the presence of RF-based tags in the vicinity of the tool control storage device 106 even if the tags are not located within the tool control storage device 106.

Each antenna is coupled to an RF transceiver that is operative to cause the antenna to emit an RF sensing signal used to excite the RF-based tags located within the vicinity of the antenna, and is operative to sense RF identification signals returned by the RF-based tags in response to the RF sensing signal. One or more RF processors control the operation of the RF transceivers and process the RF identification signals received through the antennas and transceivers.

In some embodiments, the RF sensing subsystem performs an RF-based scan of the tool control storage device 106 when a drawer or compartment storing tools having RF identification tags is completely closed. In particular, the RF-based scan can be performed in response to detecting that the drawer has been completely closed, or performed at any time when the drawer is completely closed. In some examples, the RF-based scan can also be triggered by a user logging into or logging out of the tool control storage device 106. In general, an RF-based scan can be performed in response to similar triggers causing a camera-based inventory of the tool control storage device 106 to be performed.

As part of performing an RF-based scan of the tool control storage device 106, the RF processor typically needs to perform multiple sequential scans in order to ensure that all RF-based tags are detected. Specifically, the RF processor generally does not know how many RF tags it needs to detect, since one or more tags may be missing (e.g., if a tool has been checked out). Further, the RF processor cannot generally ensure that all RF tags in its vicinity have been detected in response to a single scan operation (corresponding to the emission of one RF sensing signal, and the processing of any RF identification responses received in response to the one RF sensing signal). As a result, the RF processor will generally perform ten, twenty, or more sequential RF-based scans any time an inventory of the tool control storage device 106 is to be performed. Because multiple RF-based scans need to be performed, the RF scanning operation may require 10 or more seconds to be performed, resulting in significant inconvenience to users of the tool control storage device 106.

As noted above, imaging-based inventory scans of the tool control storage device 106 have the disadvantage that they cannot distinguish between physically identical tools. Further, RF-based scans of the tool control storage device 106 may suffer from significant delay, and cannot determine if an RF tag alone (instead of an RF tag attached to its associated tool) has been returned to the drawer or storage compartment. Both scanning methodologies, when used alone, are thus susceptible to fraud (by using a tool cut-out, or using a RFID tag removed from tool) and inconvenience. Further, each technology may not be suitable for inventorying all tools in a particular tool control storage device 106; for example, some tools may be too small to have an RF-based tag mounted thereon, or attaching of such a tag to the tool may cause the tool to be unwieldy. The inventory of such tools may thus be better suited to visual-scanning methodologies even in tool control storage devices 106 capable of RF-based sensing.

In order to address the deficiencies of the scanning methodologies when used individually, the tool control storage device 106 advantageously uses multiple scanning methodologies in combination in some embodiments. For example, the tool control storage device 106 may firstly perform a first inventory scan based on an image-based scan to obtain a quick (e.g., near instantaneous) determination of whether any tools are missing from the tool control storage device 106 based on the image-based scan alone. The result of the first inventory scan is additionally used to determine how many RF-based tags are expected to be in the tool control storage device 106. For example, in a tool control storage device 106 that usually stores 'm' tools having associated RF tags, the first inventory scan is used to determine that 'n' tools having associated RF tags are missing from the tool control storage device 106. The first inventory scan is then used to determine that the 'm-n' RF-based tags should be searched for using the second inventory scan (e.g., an RF-based scan).

In turn, the second inventory scan (e.g., an RF-based scan) is performed a single time, and only needs to be repeated if less than 'm-n' RF-based tags are detected by the first iteration of the second inventory scan (e.g., the RF-based scan). Thus, the second inventory scan can be completed very efficiently - notably in situations in which only one or a few secondary scans are needed to detect all of the 'm-n' RF-based tags that are expected to be detected in the tool control storage device 106.

Finally, an inventory cross-check is performed between the results of the first and second inventory scans to ensure that the results of the two scans are consistent. Specifically, the inventory cross-check is performed to ensure that both inventory scans have identified the same tools as being present in the tool control storage device 106 and have identified the same tools as being absent from the tool control storage device 106. User alerts are issued if the results of the two inventory scans are not consistent with each other.

While the above example has focused on an embodiment using camera-based and RF-based sensing technologies, the automated asset management system can use other combinations of multiple-sensing technologies. The sensing technologies and sensing devices used in the tool control storage device 106 can include one or more of:
- Optical identification sensors, such as: sensors for detecting one dimensional barcodes with line scanner/camera; sensors for detecting two dimensional barcodes with camera/other imaging sensor; machine vision identification sensors with camera/other imaging sensor (using various sensing approaches, including UV, infrared (IR), visible light, or the like); and laser scanning;
- RF identification sensors, such as: RFID tags affixed to/embedded in tools (active RFID tags and/or passive RFID tags); other RF technologies used in similar capacity, such as Ruby, Zigbee, WiFi, NFC, Bluetooth, Bluetooth lower energy (BLE), or the like;
- Direct electronic connection to tool, such as: tools that have attached/embedded connectors that plug into identification system (as opposed to wireless);
- Weight sensor(s), such as: scales to detect weight of objects; multiple scales to detect weight distribution;
- Contact switches/sensors, such as: single go/no-go sensors; array of sensors to detect shape/outline;
- Sonic emitter/detector pair; and/or
- Magnetic induction/sensing, such as ferrous tool locator products.

A detailed example of one illustrative embodiment is provided below. In the illustrative embodiment, a physically defined, secure three dimensional object storage device is provided. The storage device is the container from which tools and/or objects are issued and/or returned. The physically defined, secure three dimensional object storage device is equipped with a processor and software operative to cause the device to communicate electronically directly or through a network with sensing devices and to obtain data from sensing devices indicating the presence or absence data of objects within the three dimensional object storage device. In the example, the sensing devices used within the three dimensional object storage device include machine vision identification devices such as cameras or RFID antennas and decoders.

The physically defined, secure three dimensional object storage device is equipped with an electronically controlled locking mechanism, along with an access control device including a processor and software means to electronically identify a user requesting access to the secure area or object storage device in some embodiments. The processor and software identify predetermined authorized access levels to the system, and allow or deny physical access by the user to the three dimensional space or object storage devices based on those predetermined authorized levels of access. The access control device used to electronically identify the user requesting access uses RFID proximity sensors with cards in some embodiments.

In some embodiments, the physically defined, secure object storage device is equipped with drawers. At least one RFID antenna is attached inside the storage device and is configured for scanning for RFID tags within the storage device. In embodiments with multiple RFID antennas, different RFID antennas may be distributed throughout the storage device.

In operation, in some embodiments, a user scans or approaches an access card to the access control device of the storage device. The processor of the access control device determines an access level of the user based on the access card. If the user is determined to be authorized for access to the storage device, the authorized user gains access to the object storage device. In turn, the sensing subsystems and data processing system of the storage device are activated. Light emitting diodes (LEDs) used for providing light to the system are activated, and cameras are activated. In turn, the latch of the storage system is unlocked, and the user opens one or more drawers and removes or returns one or more objects.

Note that if the user opens an imaging-only drawer (i.e., a drawer whose inventory condition is determined using imaging only, and not using RFID), then the RFID scanning subsystem need not be activated and the system can use only imaging data. Specifically, the imaging subsystem is used to optionally image the drawer as it opens and to image the drawer as it is closed (or once it is closed), and object presence and absence is determined using only the captured images.

However, if the user opens a drawer for which RFID scanning is used to determine inventory conditions, a camera-based scan of the drawer is optionally performed prior to or as the drawer opens. Additionally, the RFID sensing subsystem is activated and an RFID scan may be completed prior to opening the drawer to identify all RFID tags present in the storage system (or all RFID tags present in the drawer being opened). Specifically, an RFID scan is optionally performed prior to opening of the drawer. Additionally, a camera-based scan of the drawer is performed as the drawer closes. In response to the drawer being fully closed, or in response to the user logging out of the storage system an RFID scan of the drawer or box is performed. The imaging subsystem thus determines and reports object presence and absence in the drawer, and the RFID subsystem scan confirms presence and absence of the specific objects in the drawer or box using the RFID tag data. Thus, imaging data and RFID tag data are combined to report presence and absence of all scanned tools, plus presence or absence of serialized items through use of RFID data. The inventory scan results are depicted on a display. As the user logs out, object status is transmitted via network to a primary database and/or to an administrative application. LED lights are turned off, the lock is engaged, and cameras are set in idle state.

Additionally, the storage system can perform other actions. For example, the system can activate or initiate an RFID scan on the contents of the object storage device on a scheduled or timed basis between user accesses and thereby confirm that the contents of the storage device have not changed since the last user access.

For example, an automated asset management system, such as a toolbox, may use both camera-based and radio-frequency (RF) based sensing technologies to sense the presence and/or other attributes of a particular tool (or of multiple tools). The camera-based sensing may provide an instantaneous (or near-instantaneous) indication of whether the particular tool is present in or absent from the system. The RF-based sensing may enable the system to differentiate between multiple tools that are identical to the camera-based sensing module (e.g., similar torque wrenches), for example by distinguishing between the tools' serial numbers (or other unique identifiers) or other unique tool identifiers encoded in a RF-based tag. Further, the automated asset management system may be configured to more efficiently perform RF-based sensing by leveraging the combined use of the camera-based and RF-based sensing modalities as described in more detail below.

As noted above, the scan data can be used to identify whether a specific tool (from among multiple similar tools) has been checked out or checked back in to the tool control storage device 106. The scan data can thus be used to determine how many times a particular tool has been checked out, and/or for how long a duration the particular tool has been checked out. The tool control storage device 106 can thus determine whether the particular tool should be scheduled for a re-calibration or other upkeep, for example. In one example, the tool control storage device 106 can thus individually track the usage of different torque wrenches and ensure that each torque wrench is recalibrated after a certain number of uses.

The inventory performed by the tool control storage device 106 using multiple sensing technologies can be used to identify the individual user who received and/or returned the object/tool, identify the object/tool which is being issued or returned, place a time stamp on each transaction within the system, and store the item and user data in a database

The processor and memory storing executable software program instructions of the tool control storage device 106 can exchange data with the administrative software application (e.g., computing device 102). Data may include tool issue and return data, tool statuses, user access, work location, and other data related to tool transactions and usage.

As described above, sensing technologies allow the usage of the tools to be tracked. When the tracked usage of a tool indicates that the tools needs attention (e.g., repair, calibration, replace, etc.), the tool may be removed from the worksite for repair. However, as noted above, managing the repair processes are prone to delays resulting in inefficiencies because of logistical challenges. To efficiently remove the tool from worksites and return the tool to the worksite, the repair process is automatically managed.

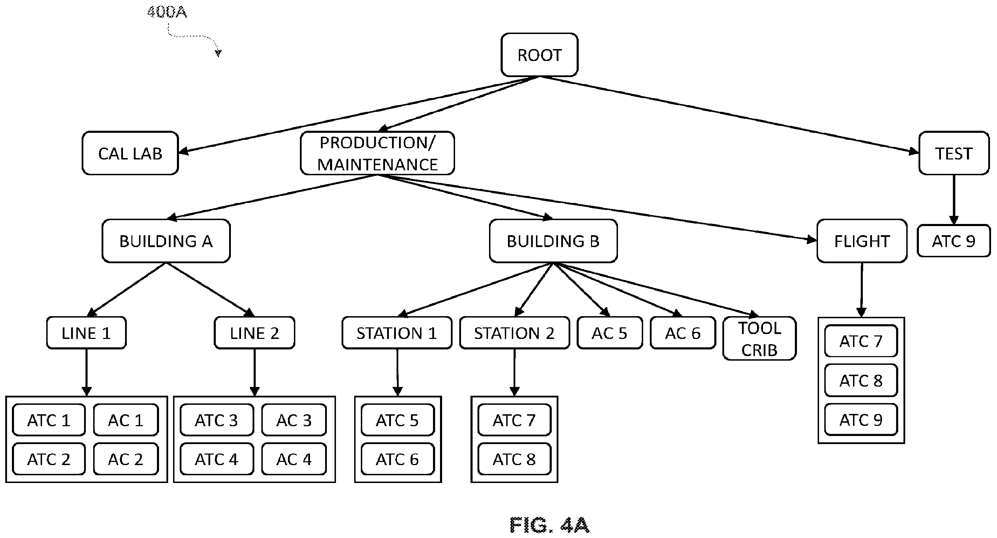

FIG. 4A shows a schematic diagram illustrating an exemplary hierarchy structure 400A of automated tool control system 100. The hierarchy structure of automated tool control system 100 includes locations including Root, Cal Lab, Production/Maintenance, Test, Building A, Building B, Line 1, Line 2, Station 1, Station 2, Tool Crib, and multiple automated tool control devices ATC1-9 and AC1-9 (e.g., tool control storage devices 106). Each of the locations within the hierarchy is assigned attributes. For example, attributes may be devices in the location, employees/users assigned to the devices in the location, objects/tools stored in the device in the location, object statuses assigned to the objects/tools in the locations. The locations may be a bin or a storage device having the function of accepting and temporarily storing objects with status, automatically distributing alerts to employees who can fix the issues indicated in the status, and then ensuring the repaired or replacement object is returned to the appropriate storage location.

For example, objects may include any item stored and managed in an automated storage device or tool crib that can be issued to a manufacturing, service and maintenance and repair environments. Objects may include tools, measuring tools, torque wrenches, pneumatic and electric power tools. In some embodiments, objects may include jigs, fixtures, clamps and other work and tool holding devices. In some other embodiments, objects include machining tools including drill bits, reamers, boring tools, end and side mills, and abrasive devices, grinding wheels, whetstones, files, sanding devices, and the like. Further, objects may be electric and electronic devices, such as meters, oscilloscopes, laptops, tablets, computers, hand held scanners, welding equipment, and the like.

Statuses of the objects/tools may be assigned by users via a user interface 305 of a tool control storage device 106. For example, statuses may include broken, needs inspection, out of calibration, out for repair, replacement requested, and sharpening drills and other cutting tools. The statuses are not limited to the foregoing list of statuses. Other statuses may be assigned to describe the status of the tools in the tool control storage devices 106.

For instance, a user A (not illustrated) logs into a tool control storage device ATC3 in a storage location Building A/Line 2. After the user A logs into the tool control storage device ATC3, the user A checks out a torque wrench from the tool control storage device ATC3. In some embodiments, direct camera imaging of the object's characteristics, imaging of colored tags on the object, RFID tags, bar codes, and bar code readers may be used to identify that the torque wrench is checked out.

In an example, if it was determined, during use, that the torque wrench was overtightened and is now out of calibration. Rather than returning the torque wrench to the tool control storage device ATC3 in a storage location Building A/Line 2, user A would place the torque wrench in a container marked with an identifying mark (not illustrated). For example, a container may include a tube or a sleeve that accommodates the item to be repaired or replaced. The identifying mark may include visual marks, such as barcodes or QR codes.

When placing the torque wrench in the container with the identifying mark, user A may use the user interface 305 of the tool control storage device 106 (e.g., ATC 3) to associate the torque wrench with the identifying mark on the container. The torque wrench in the container is deposited in a locked container corresponding to an Out of Cal location.

Once the torque wrench is deposited in the locked container corresponding to the Out of Cal location, the torque wrench is automatically assigned a "Out of Calibration" status. In some embodiments, the tool control storage device 106 which monitors the usage of the stored tool may assign a status to the stored tool based on the historical data of the stored tool. For example, once the torque wrench is deposited in the locked container or when the status of the torque wrench indicates "Out of Calibration", an alert is automatically distributed to a runner (e.g., a human or a robot). For example, the alert to the runner may be automatically distributed in response to the locked container sensing the torque wrench being deposited. In some embodiments, the runner may be automatically notified when the torque wrench is assigned the status of "Our of Calibration".

In some embodiments, the Out of Cal location is configured with instructions to automatically distribute an alert signal to users associated with the torque wrench, system administrators, and other related locations in the hierarchy. For example, the related locations may include the Cal Lab location. For example, user A and Cal Lab technicians may receive the alert signal from the Out of Cal location. In some embodiments, alert signals may contain information regarding the tool identification, the currently assigned status, the Out of Cal location, and process instructions associated with the assigned status. The alert signals may include additional information that may be useful for repair/replace processes.

In response to receiving the alert, the runner is dispatched to pick up the torque wrench from the storage location Building A/Line 2. When the runner picks up the torque wrench from the storage location of Building A/Line 2, the runner or the user A scans the identifying mark on the container and confirms the content of the container is what was input by the user A and recorded in the system.

The runner may issue or check the uncalibrated torque wrench out of the Out of Cal location and check the torque wrench in into the Cal Lab location. Once the uncalibrated torque wrench is transferred to the Cal Lab location, the uncalibrated torque wrench is then processed by Cal Lab technicians using standard procedures established by the Cal Lab team and tracked in sublocations inside the Cal Lab location. When the uncalibrated torque wrench is recalibrated, the recalibrated torque wrench is then issued out of the Cal Lab location and returned to the tool control storage device ATC3 in a storage location Building A/Line 2.

Each transaction is recorded in a log that captures tool identification data, time stamps, technician/user ID, and the like for each activity. In some embodiments, the transactional data are stored in the database 104. For example, the transactional data may be viewed from the administrative client software application on the computing device 102 or from the user interface 305 of the tool control storage device 106.

These structures are important, for example in Aerospace Repair and maintenance Organizations' perspective. For instance, managing drill bits is a monumental task. In most cases, the technicians are issued bits, but the bits are lost to the system. There is a huge amount of waste and in most cases, the MRO business have no idea of the extent of avoidable costs. Thus, these structures would reduce or minimize those avoidable costs.

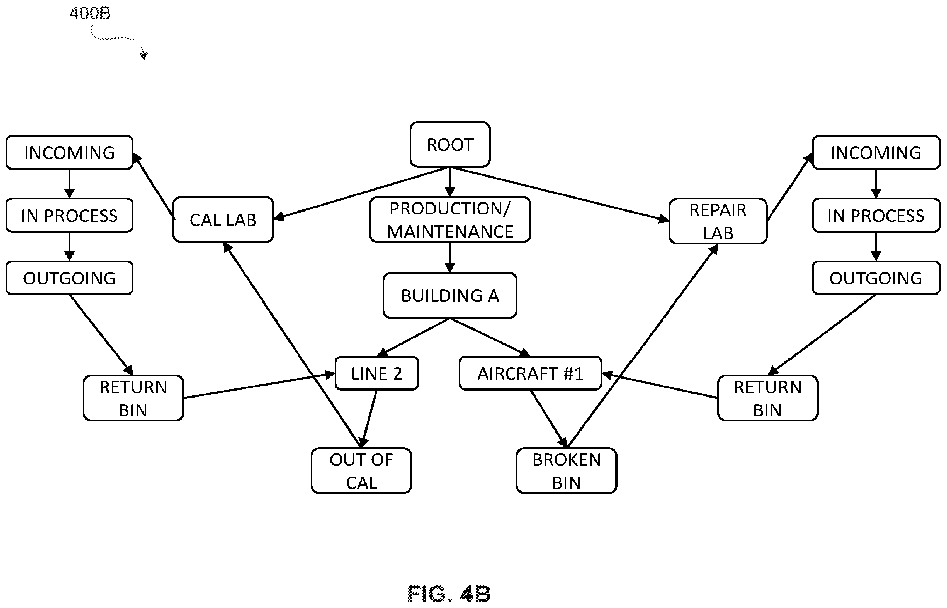

FIG. 4B shows a schematic diagram illustrating an exemplary hierarchy structure 400B of automated tool control system 100. The hierarchy structure 400B includes locations Root, Production/Maintenance, Building A, Line 2, and Aircraft #1.

For example, when an object A (not illustrated) in a tool control storage device in the Line 2 location is determined to be out of calibration, the object A is placed in the Out of Cal location as described above. In response to the object B being placed in the Broken Bin, the object A is automatically assigned a status "Out of Calibration". At the same time, an alert may be automatically distributed to a runner to facilitate a pick-up of the object A from the Broken Bin location. When the object A is transferred from the Out of Cal location to the Cal Lab location, the object A moves through the sublocations Incoming, In Process, and Outgoing within the Cal Lab location. Once the object A is recalibrated at the Cal Lab location, the object A is placed in a Return Bin location. When the object A is placed in the Return Bin location, an alert may be automatically distributed to a runner who, in response to the alert, will pick up the object A from the Return Bin location and return the object A to the tool control storage device in the Line 2 location.

For example, when an object B (not illustrated) in a tool control storage device in the Aircraft#1 location is determined to be broken, the object B is placed in the Broken Bin location as described above. In response to the object B being placed in the Broken Bin, the object B is automatically assigned a status "broken". At the same time, an alert may be automatically distributed to a runner to facilitate a pick-up of the object B from the Broken Bin location. When the object B is transferred from the Broken Bin location to the Repair Lab location, the object B moves through the sublocations Incoming, In Process, and Outgoing within the Repair Lab location. Once the object B is repaired at the Repair Lab location, the object B is placed in a Return Bin location where the object B placed in the Return Bin location is returned to the tool control storage device in the Aircraft#1 location.

In some embodiments, alert signals are automatically distributed when the objects (e.g., object A and object B) moves from one location to another location.

Although not illustrated, the hierarchy structures 400A and 400B may include the "Status Remediation" location where the status assigned to objects could be cleared while the object remains in the "Status Remediation" location by a user with appropriate access rights to that location. Registering and recording items deposited in the "Status Remediation" location could be a manual data entry by the technician or tool crib attendant. The technicians and tool crib attendant may enter data via the user interface 305 of the objects issued to the technician currently in possession of the item, the status may be assigned, and the electronic inventory transaction from the tool user to the Status Remediation location may be viewed. In some embodiments, the item transactions and transfers may be automatically registered and recorded in the database 104.

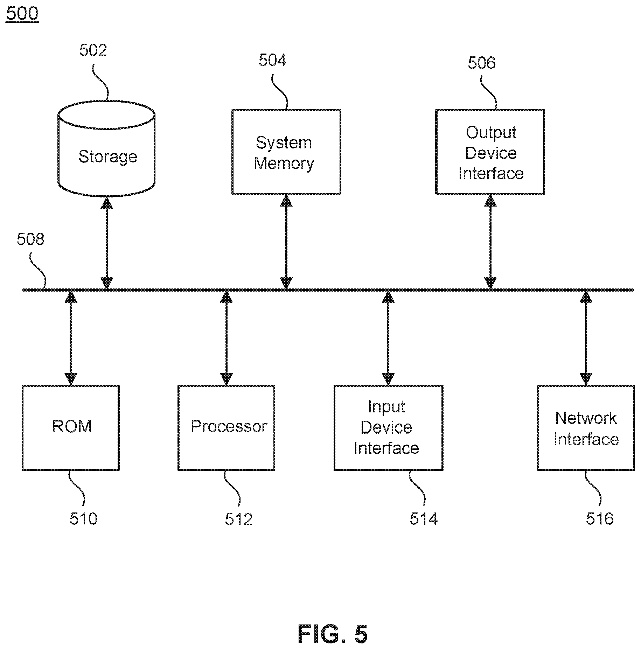

FIG. 5 conceptually illustrates an exemplary electronic system 500 with which some implementations of the subject technology can be implemented. In one or more implementations, the computing device 102 and the tool control storage devices 106 may be, or may include all or part of, the electronic system components that are discussed below with respect to the electronic system 500. The electronic system 500 can be a computer, phone, personal digital assistant (PDA), or any other sort of electronic device. Such an electronic system includes various types of computer readable media and interfaces for various other types of computer readable media. The electronic system 500 includes a bus 508, processing unit(s) 512, a system memory 504, a read-only memory (ROM) 510, a permanent storage device 502, an input device interface 514, an output device interface 506, and a network interface 516.

The bus 508 collectively represents all system, peripheral, and chipset buses that communicatively connect the numerous internal devices of the electronic system 500. For instance, the bus 508 communicatively connects the processing unit(s) 512 with the ROM 510, system memory 504, and permanent storage device 502.

From these various memory units, the processing unit(s) 512 retrieves instructions to execute and data to process in order to execute the processes of the subject disclosure. The processing unit(s) can be a single processor or a multi-core processor in different implementations.

The ROM 510 stores static data and instructions that are needed by the processing unit(s) 512 and other modules of the electronic system. The permanent storage device 502, on the other hand, is a read-and-write memory device. This device is a nonvolatile memory unit that stores instructions and data even when the electronic system 500 is off. Some implementations of the subject disclosure use a mass-storage device (for example, a magnetic or optical disk, or flash memory) as the permanent storage device 502.

Other implementations use a removable storage device (for example, a floppy disk, flash drive) as the permanent storage device 502. Like the permanent storage device 502, the system memory 504 is a read-and-write memory device. However, unlike the storage device 502, the system memory 504 is a volatile read-and-write memory, such as a random access memory. The system memory 504 stores some of the instructions and data that the processor needs at runtime. In some implementations, the processes of the subject disclosure are stored in the system memory 504, the permanent storage device 502, or the ROM 510. For example, the various memory units include instructions for displaying graphical elements and identifiers associated with respective applications, receiving a predetermined user input to display visual representations of shortcuts associated with respective applications, and displaying the visual representations of shortcuts. From these various memory units, the processing unit(s) 512 retrieves instructions to execute and data to process in order to execute the processes of some implementations.

The bus 508 also connects to the input and output device interfaces 514 and 506. The input device interface 514 enables the user to communicate information and select commands to the electronic system. Input devices used with the input device interface 514 include, for example, alphanumeric keyboards and pointing devices (also called "cursor control devices"). The output device interface 506 enables, for example, the display of images generated by the electronic system 500. Output devices used with the output device interface 506 include, for example, printers and display devices, for example, cathode ray tubes (CRT) or liquid crystal displays (LCD). Some implementations include devices, for example, a touchscreen that functions as both input and output devices.

Finally, as shown in FIG. 5, the bus 508 also couples the electronic system 500 to a network (not shown) through a network interface. In this manner, the computer can be a part of a network of computers (for example, a LAN, a WAN, or an Intranet, or a network of networks, for example, the Internet). Any or all components of the electronic system 500 can be used in conjunction with the subject disclosure.

Many of the above-described features and applications are implemented as software processes that are specified as a set of instructions recorded on a computer readable storage medium (also referred to as computer readable medium). When these instructions are executed by one or more processing unit(s) (e.g., one or more processors, cores of processors, or other processing units), they cause the processing unit(s) to perform the actions indicated in the instructions. Examples of computer readable media include, but are not limited to, magnetic media, optical media, electronic media, etc. The computer readable media does not include carrier waves and electronic signals passing wirelessly or over wired connections.

Unless otherwise stated, all measurements, values, ratings, positions, magnitudes, sizes, and other specifications that are set forth in this specification are approximate, not exact. They are intended to have a reasonable range that is consistent with the functions to which they relate and with what is customary in the art to which they pertain.

Except as stated immediately above, nothing that has been stated or illustrated is intended or should be interpreted to cause a dedication of any component, step, feature, object, benefit, advantage, or equivalent to the public.

In this specification, the term "software" is meant to include, for example, firmware residing in read-only memory or other form of electronic storage, or applications that may be stored in magnetic storage, optical, solid state, etc., which can be read into memory for processing by a processor. Also, in some implementations, multiple software aspects of the subject disclosure can be implemented as sub-parts of a larger program while remaining distinct software aspects of the subject disclosure. In some implementations, multiple software aspects can also be implemented as separate programs. Finally, any combination of separate programs that together implement a software aspect described here is within the scope of the subject disclosure. In some implementations, the software programs, when installed to operate on one or more electronic systems, define one or more specific machine implementations that execute and perform the operations of the software programs.

A computer program (also known as a program, software, software application, script, or code) can be written in any form of programming language, including compiled or interpreted languages, declarative or procedural languages, and it can be deployed in any form, including as a standalone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

These functions described above can be implemented in digital electronic circuitry, in computer software, firmware, or hardware. The techniques can be implemented using one or more computer program products. Programmable processors and computers can be included in or packaged as mobile devices. The processes and logic flows can be performed by one or more programmable processors and by one or more programmable logic circuitry. General and special purpose computing devices and storage devices can be interconnected through communication networks.

Some implementations include electronic components, for example, microprocessors, storage, and memory that store computer program instructions in a machine-readable or computer-readable medium (alternatively referred to as computer-readable storage media, machine-readable media, or machine-readable storage media). Some examples of such computer-readable media include RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic or solid state hard drives, read-only and recordable Blu-Ray^{®} discs, ultra-density optical discs, any other optical or magnetic media, and floppy disks. The computer-readable media can store a computer program that is executable by at least one processing unit and includes sets of instructions for performing various operations. Examples of computer programs or computer code including machine code, for example, produced by a compiler, and files including higher-level code that are executed by a computer, an electronic component, or a microprocessor using an interpreter.

While the above discussion primarily refers to microprocessor or multi-core processors that execute software, some implementations are performed by one or more integrated circuits, for example, application specific integrated circuits (ASICs) or field programmable gate arrays (FPGAs). In some implementations, such integrated circuits execute instructions that are stored on the circuit itself.

As used in this disclosure, the terms "computer", "server", "processor", and "memory" all refer to electronic or other technological devices. These terms exclude people or groups of people. For the purposes of the specification, the terms display or displaying means displaying on an electronic device. As used in this disclosure, the terms "computer readable medium" and "computer readable media" are entirely restricted to tangible, physical objects that store information in a form that is readable by a computer. These terms exclude any wireless signals, wired download signals, and any other ephemeral signals.

To provide for interaction with a user, implementations of the subject matter described in this specification can be implemented on a computer having a display device, e.g., a CRT or LCD monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

It is understood that any specific order or hierarchy of steps in the processes disclosed is an illustration of example approaches. Based upon design preferences, it is understood that the specific order or hierarchy of steps in the processes may be rearranged, or that all illustrated steps be performed. Some of the steps may be performed simultaneously. For example, in certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

The previous description is provided to enable any person skilled in the art to practice the various aspects described herein. Various modifications to these aspects will be readily apparent to those skilled in the art, and the generic principles defined herein may be applied to other aspects. Where reference to an element in the singular is not intended to mean "one and only one" unless specifically so stated, but rather "one or more". Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

Phrases such as an aspect, the aspect, another aspect, some aspects, one or more aspects, an implementation, the implementation, another implementation, some implementations, one or more implementations, an embodiment, the embodiment, another embodiment, some embodiments, one or more embodiments, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

To the extent that the systems discussed herein collect usage data associated with users, or may make use of the usage data, the users are provided with opportunities to control whether programs or features collect usage data (e.g., a user's preferences), and to control the user interface (UI) associated with applications based on the collected usage data. The users may also be provided with options to turn on or turn off certain features or functions provided by the systems. In some aspects, the users may elect to disable features and functions (e.g., control the UI associated with applications based on the collected usage data) offered by the systems discussed herein. In addition, users may stipulate that certain data be treated in one or more ways before it is stored or used, so that personally identifiable information is removed. For example, a user's identity may be treated so that no personally identifiable information can be determined for the user, or a user's geographic location may be generalized where location information is obtained (such as to a city, zip code, or state level), so that a particular location of a user cannot be determined. Thus, the user has control over whether and how user information is collected, stored, and used by the disclosed systems.

Moreover, nothing disclosed herein is intended to be dedicated to the public regardless of whether such disclosure is explicitly recited in the above description. Furthermore, to the extent that the term "include", "have", or the like is used in the disclosure, such term is intended to be inclusive in a manner similar to the term "comprise" as "comprise" is interpreted.

It will be understood that the terms and expressions used herein have the ordinary meaning as is accorded to such terms and expressions with respect to their corresponding respective areas of inquiry and study except where specific meanings have otherwise been set forth herein. Relational terms such as first and second and the like may be used solely to distinguish one entity or action from another without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "a" or "an" does not, without further constraints, preclude the existence of additional identical elements in the process, method, article, or apparatus that comprises the element.

In the foregoing Description, it can be seen that various features are grouped together in various embodiments for the purpose of streamlining the disclosure.

While the foregoing has described what are considered to be the best mode and/or other examples, it is understood that various modifications may be made therein and that the subject matter disclosed herein may be implemented in various forms and examples, and that the teachings may be applied in numerous applications, only some of which have been described herein. It is intended that this disclosure cover any and all applications, modifications and variations that fall within the true scope of the claims.

## Claims

1. An automated inventory control system (100), comprising:
one or more storage devices (106, 106A, 106B, 106C) containing a plurality of storage locations for storing objects;
a first predefined location for receiving one or more objects, the first predefined location including a sensing system comprising one or more cameras configured to obtain images of the plurality of storage locations, and/or one or more RF sensors configured to detect RFID tags, wherein the sensing system is configured to sense when an object is deposited at the first predefined location;
a second predefined location for receiving one or more objects; the second predefined location including a sensing system comprising one or more cameras configured to obtain images of the plurality of storage locations, and/or one or more RF sensors configured to detect RFID tags, wherein the sensing system is configured to sense when an object is deposited at the second predefined location;
one or more processors configured to:
when an object is deposited at the first predefined location,
automatically assign a first status to the object,
cause transmission of a first alert indicating the first status of the deposited object,
distribute the first alert to users in response to the deposited object, wherein the first alert contains information regarding process instructions associated with the assigned first status, and
track with the sensing system a plurality of transactions associated with the deposited object based on data including object issue and return data, object statuses, user access, and/or work location, after a user checks the deposited object out of the first predefined location, and
when the object is deposited at the second predefined location,
automatically assign a second status to the object,
cause transmission of a second alert indicating the second status of the deposited object, and
distribute the second alert to users in response to the deposited object, wherein the second alert contains information regarding process instructions associated with the assigned second status.

2. The automated inventory control system of claim 1, wherein the first predefined location is configured to permit the user that received a transmitted alert indicating a first status of the deposited object to check the deposited object out of the first predefined location.

3. The automated inventory control system of claim 1,
wherein the data processor is configured to automatically assign the first status based on information sensed by the sensing system of the first predefined location corresponding to the deposited object;
wherein, optionally, the sensed information corresponds to visual markings on a container that contains the deposited object.

4. The automated inventory control system of claim 1, further comprising:
an input device configured to receive user input;
wherein the data processor is configured to automatically assign the first status based on user input received by the input device; and/or
further comprising:
a third predefined location for receiving one or more objects;
wherein the first and third predefined locations each correspond to a respective status, such that an object deposited at the first predefined location is automatically assigned a different first status than when deposited at the third predefined location.

5. The automated inventory control system of claim 1, wherein the sensing systems of the first and second predefined locations each comprise at least one of:
one or more electrical connections configured to connect to respective objects,
one or more scales configured to detect weights of respective objects,
an array of contact sensors configured to detect a shape of an object,
one or more ultrasonic sensors, each comprising an emitter configured to emit sound waves and a detector configured to detect sound waves, or
one or more magnetic inductive sensors configured to detect metallic objects.

6. The automated inventory control system of claim 1, further comprising:
an input device configured to receive user input;
wherein the data processor is further configured to, based on user input received by the input device, clear the automatically assigned status of the object and assign a third status to the object based on the user input.

7. A method for an automated inventory control system, comprising the steps of:
storing an object in a storage location of a storage device (106, 106A, 106B, 106C);
receiving the object in a first predefined location, the first predefined location including a sensing system comprising one or more cameras configured to obtain images of the plurality of storage locations, and/or one or more RF sensors configured to detect RFID tags;
based on receipt of the object in the first predefined location, automatically assigning a first status to the object;
transmitting a first alert indicating the first status of the deposited object;
distributing the first alert to users in response to the deposited object, wherein the first alert contains information regarding process instructions associated with the assigned first status;
checking the deposited object out of the first predefined location;
tracking with the sensing system a plurality of transactions associated with the deposited object based on data including object issue and return data, object statuses, user access, and/or work location, after the user checks the deposited object out of the first predefined location;
receiving the object in a second predefined location, the second predefined location including a sensing system comprising one or more cameras configured to obtain images of the plurality of storage locations, and/or one or more RF sensors configured to detect RFID tags;
based on receipt of the object in the second predefined location, automatically assigning a second status to the object;
transmitting a second alert indicating the second status of the deposited object;
distributing the second alert to users in response to the deposited object, wherein the second alert contains information regarding process instructions associated with the assigned second status;
checking the deposited object out of the second predefined location;
receiving the object in the storage location of the storage device (106, 106A, 106B, 106C).

8. The method of claim 7, wherein a user receives the transmitted alert indicating the first status of the deposited object and, in response to receiving the transmitted alert, checks the deposited object out of the first predefined location.

9. The method of claim 7, further comprising the step of:
sensing, at the first predefined location, information corresponding to the deposited object,
wherein the first status is automatically assigned based on the information sensed at the first predefined location;
wherein, optionally, the sensed information at the first predefined location corresponds to visual markings on a container that contains the deposited object.

10. The method of claim 7, further comprising the step of:
receiving user input at an input device,
wherein the first status is automatically assigned based on user input received by the input device; and/or
further comprising the step of:
storing a second object in a second storage location of the storage device (106, 106A, 106B, 106C);
receiving the second object in a third predefined location,
receiving, in a fourth predefined location, a replacement object corresponding to the second object;
based on receipt of the replacement object in the fourth predefined location, automatically assigning a status to the replacement object;
transmitting an alert indicating the status of the replacement object;
checking the replacement object out of the fourth predefined location;
receiving the replacement object in the second storage location of the storage device (106, 106A, 106B, 106C).

11. The method of claim 7,
wherein receipt of the object at the first and second predefined locations are detected by the sensing systems that each further comprise at least one of:
one or more electrical connections configured to connect to respective objects,
one or more scales configured to detect weights of respective objects,
an array of contact sensors configured to detect a shape of an object,
one or more ultrasonic sensors, each comprising an emitter configured to emit sound waves and a detector configured to detect sound waves, or
one or more magnetic inductive sensors configured to detect metallic objects; and/or
further comprising the step of:
receiving user input at an input device;
based on the received user input, clearing the automatically assigned status of the object and assigning a third status to the object.

12. A non-transitory computer-readable medium storing executable instructions for carrying out a process comprising the steps of:
determining that an object is present in a storage location of a storage device (106, 106A, 106B, 106C);
determining that the object is present in a first predefined location, the first predefined location including a sensing system comprising one or more cameras configured to obtain images of the plurality of storage locations, and/or one or more RF sensors configured to detect RFID tags;
based on the determination that the object is present in the first predefined location,
automatically assigning a first status to the object;
causing the transmission of a first alert indicating the first status of the deposited object; and
distributing the first alert to users in response to the deposited object, wherein the first alert contains information regarding process instructions associated with the assigned first status;
tracking with the sensing system a plurality of transactions associated with the deposited object based on data including object issue and return data, object statuses, user access, and/or work location, after the deposited object is checked out of the first predefined location;
determining that the object is present in a second predefined location, the second predefined location including a sensing system comprising one or more cameras configured to obtain images of the plurality of storage locations, and/or one or more RF sensors configured to detect RFID tags;
based on the determination that the object is present in the second predefined location,
automatically assigning a second status to the object;
causing the transmission of a second alert indicating the second status of the deposited object;
distributing the second alert to users in response to the deposited object, wherein the second alert contains information regarding process instructions associated with the assigned second status;
determining that the object is present in the storage location of the storage device (106, 106A, 106B, 106C) after the deposited object is checked out of the second predefined location.

13. The medium of claim 12, the process further comprising the step of:
allowing a user who received the transmitted alert indicating the first status of the deposited object to check the deposited object out of the first predefined location; and/or
the process further comprising the steps of:
receiving sensed information corresponding to the deposited object at the first location,
wherein the first status is assigned based on the sensed information;
wherein, optionally, the sensed information at the first predefined location corresponds to visual markings on a container that contains the deposited object; and/or
wherein the first status to the object is automatically assigned based on user input received by an input device.

14. The medium of claim 12, the process further comprising the steps of:
determining that a second object is present in a second storage location of the storage device (106, 106A, 106B, 106C);
determining that the second object is present in a third predefined location,
determining that a replacement object corresponding to the second object is present in a fourth predefined location;
based on the determination that the replacement object is present in the fourth predefined location, automatically assigning a status to the replacement object;
causing the transmission of an alert indicating the status of the replacement object;
determining that the replacement object is present in the second storage location of the storage device (106, 106A, 106B, 106C) after the replacement object is checked out of the fourth predefined location.

15. The medium of claim 12,
wherein determination of the object at the first and second predefined locations are based on information received from the sensing systems that each further comprise at least one of:
one or more electrical connections configured to connect to respective objects,
one or more scales configured to detect weights of respective objects,
an array of contact sensors configured to detect a shape of an object,
one or more ultrasonic sensors, each comprising an emitter configured to emit sound waves and a detector configured to detect sound waves, or
one or more magnetic inductive sensors configured to detect metallic objects; and/or
the process further comprising the step of:
receiving user input from an input device;
based on the received user input, clearing the automatically assigned status of the object and assigning a third status to the object.

## Patentansprüche

1. Automatisiertes Inventarsteuersystem (100), umfassend:
eine oder mehrere Aufbewahrungsvorrichtungen (106, 106A, 106B, 106C), die eine Vielzahl von Aufbewahrungsorten zum Aufbewahren von Gegenständen enthalten;
einen ersten vorab definierten Ort zum Aufnehmen von einem oder mehreren Gegenständen, wobei der erste vorab definierte Ort ein Erfassungssystem einschließt, das eine oder mehrere Kameras, die konfiguriert sind, um Bilder der Vielzahl von Aufbewahrungsorten zu erhalten, und/oder einen oder mehrere HF-Sensoren, die konfiguriert sind, um RFID-Tags zu erkennen, umfasst, wobei das Erfassungssystem konfiguriert ist, um zu erfassen, wenn ein Gegenstand an dem ersten vorab definierten Ort abgelegt wird;
einen zweiten vorab definierten Ort zum Aufnehmen von einem oder mehreren Gegenständen; wobei der zweite vorab definierte Ort ein Erfassungssystem einschließt, das eine oder mehrere Kameras, die konfiguriert sind, um Bilder der Vielzahl von Aufbewahrungsorten zu erhalten, und/oder einen oder mehrere HF-Sensoren, die konfiguriert sind, um RFID-Tags zu erkennen, umfasst, wobei das Erfassungssystem konfiguriert ist, um zu erfassen, wenn ein Gegenstand an dem zweiten vorab definierten Ort abgelegt wird;
einen oder mehrere Prozessoren, die konfiguriert sind, um:
wenn ein Gegenstand an dem ersten vorab definierten Ort abgelegt wird,
dem Gegenstand automatisch einen ersten Status zuzuweisen, eine Übertragung einer ersten Warnung, die den ersten Status des abgelegten Gegenstands anzeigt, zu bewirken,
die erste Warnung an Benutzer als Reaktion auf den abgelegten Gegenstand zu verteilen, wobei die erste Warnung Informationen bezüglich Prozessanweisungen enthält, die mit dem zugewiesenen ersten Status verknüpft sind, und
mit dem Erfassungssystem eine Vielzahl von Transaktionen zu verfolgen, die mit dem abgelegten Gegenstand verknüpft sind, basierend auf Daten einschließlich Gegenstandsausgabe- und - rückgabedaten, Gegenstandsstati, des Benutzerzugriffs und/oder des Arbeitsorts, nachdem ein Benutzer den abgelegten Gegenstand aus dem ersten vorab definierten Ort auscheckt, und,
wenn der Gegenstand an dem zweiten vorab definierten Ort abgelegt wird,
dem Gegenstand automatisch einen zweiten Status zuzuweisen, die Übertragung einer zweiten Warnung, die den zweiten Status des abgelegten Gegenstands anzeigt, zu bewirken, und
die zweite Warnung Benutzern als Reaktion auf den abgelegten Gegenstand zu verteilen, wobei die zweite Warnung Informationen bezüglich Prozessanweisungen enthält, die mit dem zugewiesenen zweiten Status verknüpft sind.

2. Automatisiertes Inventarsteuersystem nach Anspruch 1, wobei der erste vorab definierte Ort konfiguriert ist, um zu erlauben, dass der Benutzer, der eine übertragene Warnung erhielt, die einen ersten Status des abgelegten Gegenstands anzeigt, den abgelegten Gegenstand aus dem ersten vorab definierten Ort auscheckt.

3. Automatisiertes Inventarsteuersystem nach Anspruch 1,
wobei der Datenprozessor konfiguriert ist, um den ersten Status automatisch basierend auf Informationen, die von dem Erfassungssystem des ersten vorab definierten Orts erfasst wurden, entsprechend dem abgelegten Gegenstand zuzuweisen;
wobei wahlweise die erfassten Informationen visuellen Markierungen auf einem Behälter entsprechen, der den abgelegten Gegenstand enthält.

4. Automatisiertes Inventarsteuersystem nach Anspruch 1, ferner umfassend:
eine Eingabevorrichtung, die konfiguriert ist, um eine Benutzereingabe zu erhalten;
wobei der Datenprozessor konfiguriert ist, um den ersten Status automatisch basierend auf der Benutzereingabe, die von der Eingabevorrichtung erhalten wird, zuzuweisen; und/oder
ferner umfassend:
einen dritten vorab definierten Ort zum Aufnehmen von einem oder mehreren Gegenständen;
wobei der erste und der dritte vorab definierte Ort jeweils einem jeweiligen Status entsprechen, so dass einem Gegenstand, der an dem ersten vorab definierten Ort abgelegt wird, automatisch ein anderer erster Status zugewiesen wird, als wenn er an dem dritten vorab definierten Ort abgelegt wird.

5. Automatisiertes Inventarsteuersystem nach Anspruch 1, wobei die Erfassungssysteme des ersten und des zweiten vorab definierten Orts jeweils Folgendes umfassen:
eine oder mehrere elektrische Verbindungen, die konfiguriert sind, um sich mit jeweiligen Gegenständen zu verbinden, und/oder
eine oder mehrere Waagen, die konfiguriert sind, um Gewichte von jeweiligen Gegenständen zu erfassen, und/oder
ein Array von Kontaktsensoren, die konfiguriert sind, um eine Form eines Gegenstands zu erkennen, und/oder
einen oder mehrere Ultraschallsensoren, die jeweils einen Emitter, der konfiguriert ist, um Schallwellen auszugeben, und einen Detektor, der konfiguriert ist, um Schallwellen zu erkennen, umfassen, und/oder
einen oder mehrere magnetische induktive Sensoren, die konfiguriert sind, um Metallgegenstände zu erkennen.

6. Automatisiertes Inventarsteuersystem nach Anspruch 1, ferner umfassend:
eine Eingabevorrichtung, die konfiguriert ist, um eine Benutzereingabe zu erhalten;
wobei der Datenprozessor ferner konfiguriert ist, um basierend auf der Benutzereingabe, die von der Eingabevorrichtung erhalten wird, den automatisch zugewiesenen Status des Gegenstands zu löschen und dem Gegenstand basierend auf der Benutzereingabe einen dritten Status zuzuweisen.

7. Verfahren für ein automatisiertes Inventarsteuersystem, umfassend die folgenden Schritte:
Aufbewahren eines Gegenstands an einem Aufbewahrungsort einer Aufbewahrungsvorrichtung (106, 106A, 106B, 106C);
Erhalten des Gegenstands an einem ersten vorab definierten Ort, wobei der erste vorab definierte Ort ein Erfassungssystem einschließt, das eine oder mehrere Kameras, die konfiguriert sind, um Bilder der Vielzahl von Aufbewahrungsorten zu erhalten, und/oder einen oder mehrere HF-Sensoren, die konfiguriert sind, um RFID-Tags zu erkennen, umfasst;
basierend auf dem Erhalt des Gegenstands an dem ersten vorab definierten Ort, automatisches Zuweisen eines ersten Status zu dem Gegenstand;
Übertragen einer ersten Warnung, die den ersten Status des abgelegten Gegenstands anzeigt;
Verteilen der ersten Warnung auf Benutzer als Reaktion auf den abgelegten Gegenstand, wobei die erste Warnung Informationen bezüglich Prozessanweisungen enthält, die mit dem zugewiesenen ersten Status verknüpft sind;
Auschecken des abgelegten Gegenstands aus dem ersten vorab definierten Ort;
Verfolgen mit dem Erfassungssystem einer Vielzahl von Transaktionen, die mit dem abgelegten Gegenstand verknüpft sind, basierend auf Daten einschließlich Gegenstandsausgabe- und -rückgabedaten, Gegenstandsstati, des Benutzerzugriffs und/oder des Arbeitsorts, nachdem der Benutzer den abgelegten Gegenstand aus dem ersten vorab definierten Ort auscheckt;
Erhalten des Gegenstands an einem zweiten vorab definierten Ort, wobei der zweite vorab definierte Ort ein Erfassungssystem einschließt, das eine oder mehrere Kameras, die konfiguriert sind, um Bilder der Vielzahl von Aufbewahrungsorten zu erhalten, und/oder einen oder mehrere HF-Sensoren, die konfiguriert sind, um RFID-Tags zu erkennen, umfasst;
basierend auf dem Erhalt des Gegenstands an dem zweiten vorab definierten Ort, automatisches Zuweisen eines zweiten Status zu dem Gegenstand;
Übertragen einer zweiten Warnung, die den zweiten Status des abgelegten Gegenstands anzeigt;
Verteilen der zweiten Warnung auf Benutzer als Reaktion auf den abgelegten Gegenstand, wobei die zweite Warnung Informationen bezüglich Prozessanweisungen enthält, die mit dem zugewiesenen zweiten Status verknüpft sind;
Auschecken des abgelegten Gegenstands aus dem zweiten vorab definierten Ort;
Erhalten des Gegenstands an dem Aufbewahrungsort der Aufbewahrungsvorrichtung (106, 106A, 106B, 106C).

8. Verfahren nach Anspruch 7, wobei ein Benutzer die übertragene Warnung erhält, die den ersten Status des abgelegten Gegenstands anzeigt, und als Reaktion auf das Erhalten der übertragenen Warnung den abgelegten Gegenstand aus dem ersten vorab definierten Ort auscheckt.

9. Verfahren nach Anspruch 7, ferner umfassend den Schritt:
Erfassen, an dem ersten vorab definierten Ort, von Informationen entsprechend dem abgelegten Gegenstand,
wobei der erste Status automatisch basierend auf den Informationen, die an dem ersten vorab definierten Ort erfasst werden, zugewiesen wird;
wobei wahlweise die erfassten Informationen an dem ersten vorab definierten Ort visuellen Markierungen auf einem Behälter entsprechen, der den abgelegten Gegenstand enthält.

10. Verfahren nach Anspruch 7, ferner umfassend den Schritt:
Erhalten einer Benutzereingabe an einer Eingabevorrichtung,
wobei der erste Status automatisch basierend auf der Benutzereingabe, die von der Eingabevorrichtung erhalten wird, zugewiesen wird; und/oder
ferner umfassend den Schritt:
Aufbewahren eines zweiten Gegenstands an einem zweiten Aufbewahrungsort der Aufbewahrungsvorrichtung (106, 106A, 106B, 106C);
Erhalten des zweiten Gegenstands an einem dritten vorab definierten Ort,
Erhalten, an einem vierten vorab definierten Ort, eines Ersatzgegenstands, der dem zweiten Gegenstand entspricht;
basierend auf dem Erhalt des Ersatzgegenstands an dem vierten vorab definierten Ort, automatisches Zuweisen eines Status zu dem Ersatzgegenstand;
Übertragen einer Warnung, die den Status des Ersatzgegenstands anzeigt;
Auschecken des Ersatzgegenstands aus dem vierten vorab definierten Ort;
Erhalten des Ersatzgegenstands an dem zweiten Aufbewahrungsort der Aufbewahrungsvorrichtung (106, 106A, 106B, 106C).

11. Verfahren nach Anspruch 7,
wobei der Erhalt des Gegenstands an dem ersten und dem zweiten vorab definierten Ort durch die Erfassungssysteme erfasst wird, die jeweils ferner Folgendes umfassen:
eine oder mehrere elektrische Verbindungen, die konfiguriert sind, um sich mit jeweiligen Gegenständen zu verbinden, und/oder
eine oder mehrere Waagen, die konfiguriert sind, um Gewichte von jeweiligen Gegenständen zu erfassen, und/oder
ein Array von Kontaktsensoren, die konfiguriert sind, um eine Form eines Gegenstands zu erkennen, und/oder
einen oder mehrere Ultraschallsensoren, die jeweils einen Emitter, der konfiguriert ist, um Schallwellen auszugeben, und einen Detektor, der konfiguriert ist, um Schallwellen zu erkennen, umfassen, und/oder
einen oder mehrere magnetische induktive Sensoren, die konfiguriert sind, um Metallgegenstände zu erkennen; und/oder
ferner umfassend den Schritt:
Erhalten einer Benutzereingabe an einer Eingabevorrichtung;
basierend auf der erhaltenen Benutzereingabe, Löschen des automatisch zugewiesenen Status des Gegenstands und Zuweisen eines dritten Status zu dem Gegenstand.

12. Nichtflüchtiges computerlesbares Medium, das ausführbare Anweisungen zum Ausführen eines Prozesses speichert, der die folgenden Schritte umfasst:
Bestimmen, dass ein Gegenstand an einem Aufbewahrungsort einer Aufbewahrungsvorrichtung (106, 106A, 106B, 106C) vorhanden ist;
Bestimmen, dass der Gegenstand an einem ersten vorab definierten Ort vorhanden ist, wobei der erste vorab definierte Ort ein Erfassungssystem einschließt, das eine oder mehrere Kameras, die konfiguriert sind, um Bilder der Vielzahl von Aufbewahrungsorten zu erhalten, und/oder einen oder mehrere HF-Sensoren, die konfiguriert sind, um RFID-Tags zu erkennen, umfasst;
basierend auf der Bestimmung, dass der Gegenstand an dem ersten vorab definierten Ort vorhanden ist,
automatisches Zuweisen eines ersten Status zu dem Gegenstand;
Bewirken der Übertragung einer ersten Warnung, die den ersten Status des abgelegten Gegenstands anzeigt; und
Verteilen der ersten Warnung auf Benutzer als Reaktion auf den abgelegten Gegenstand, wobei die erste Warnung Informationen bezüglich Prozessanweisungen enthält, die mit dem zugewiesenen ersten Status verknüpft sind;
Verfolgen mit dem Erfassungssystem einer Vielzahl von Transaktionen, die mit dem abgelegten Gegenstand verknüpft sind, basierend auf Daten einschließlich Gegenstandsausgabe- und -rückgabedaten, Gegenstandsstati, des Benutzerzugriffs und/oder des Arbeitsorts, nachdem der abgelegte Gegenstand aus dem ersten vorab definierten Ort ausgecheckt wird;
Bestimmen, dass der Gegenstand an einem zweiten vorab definierten Ort vorhanden ist, wobei der zweite vorab definierte Ort ein Erfassungssystem einschließt, das eine oder mehrere Kameras, die konfiguriert sind, um Bilder der Vielzahl von Aufbewahrungsorten zu erhalten, und/oder einen oder mehrere HF-Sensoren, die konfiguriert sind, um RFID-Tags zu erkennen, umfasst;
basierend auf der Bestimmung, dass der Gegenstand an dem zweiten vorab definierten Ort vorhanden ist,
automatisches Zuweisen eines zweiten Status zu dem Gegenstand;
Bewirken der Übertragung einer zweiten Warnung, die den zweiten Status des abgelegten Gegenstands anzeigt;
Verteilen der zweiten Warnung auf Benutzer als Reaktion auf den abgelegten Gegenstand, wobei die zweite Warnung Informationen bezüglich Prozessanweisungen enthält, die mit dem zugewiesenen zweiten Status verknüpft sind;
Bestimmen, dass der Gegenstand an dem Aufbewahrungsort der Aufbewahrungsvorrichtung (106, 106A, 106B, 106C) vorhanden ist, nachdem der abgelegte Gegenstand aus dem zweiten vorab definierten Ort ausgecheckt wird.

13. Medium nach Anspruch 12, wobei der Prozess ferner den folgenden Schritt umfasst:
Erlauben, dass ein Benutzer, der die übertragene Warnung erhielt, die den ersten Status des abgelegten Gegenstands anzeigt, den abgelegten Gegenstand aus dem ersten vorab definierten Ort auscheckt; und/oder
wobei der Prozess ferner folgende Schritte umfasst:
Erhalten von erfassten Informationen entsprechend dem abgelegten Gegenstand an dem ersten Ort,
wobei der erste Status basierend auf den erfassten Informationen zugewiesen wird;
wobei wahlweise die erfassten Informationen an dem ersten vorab definierten Ort visuellen Markierungen auf einem Behälter entsprechen, der den abgelegten Gegenstand enthält; und/oder
wobei der erste Status dem Gegenstand automatisch basierend auf einer Benutzereingabe zugewiesen wird, die von einer Eingabevorrichtung erhalten wird.

14. Medium nach Anspruch 12, wobei der Prozess ferner die folgenden Schritte umfasst:
Bestimmen, dass ein zweiter Gegenstand an einem zweiten Aufbewahrungsort der Aufbewahrungsvorrichtung (106, 106A, 106B, 106C) vorhanden ist;
Bestimmen, dass der zweite Gegenstand an einem dritten vorab definierten Ort vorhanden ist,
Bestimmen, dass ein Ersatzgegenstand entsprechend dem zweiten Gegenstand an einem vierten vorab definierten Ort vorhanden ist;
basierend auf der Bestimmung, dass der Ersatzgegenstand an dem vierten vorab definierten Ort vorhanden ist, automatisches Zuweisen eines Status zu dem Ersatzgegenstand;
Bewirken der Übertragung einer Warnung, die den Status des Ersatzgegenstands anzeigt;
Bestimmen, dass der Ersatzgegenstand an dem zweiten Aufbewahrungsort der Aufbewahrungsvorrichtung (106, 106A, 106B, 106C) vorhanden ist, nachdem der Ersatzgegenstand aus dem vierten vorab definierten Ort ausgecheckt wird.

15. Medium nach Anspruch 12,
wobei die Bestimmung des Gegenstands an dem ersten und dem zweiten vorab definierten Ort auf Informationen basiert, die von den Erfassungssystemen erhalten werden, die jeweils ferner Folgendes umfassen:
eine oder mehrere elektrische Verbindungen, die konfiguriert sind, um sich mit jeweiligen Gegenständen zu verbinden, und/oder
eine oder mehrere Waagen, die konfiguriert sind, um Gewichte von jeweiligen Gegenständen zu erfassen, und/oder
ein Array von Kontaktsensoren, die konfiguriert sind, um eine Form eines Gegenstands zu erkennen, und/oder
einen oder mehrere Ultraschallsensoren, die jeweils einen Emitter, der konfiguriert ist, um Schallwellen auszugeben, und einen Detektor, der konfiguriert ist, um Schallwellen zu erkennen, umfassen, und/oder
einen oder mehrere magnetische induktive Sensoren, die konfiguriert sind, um Metallgegenstände zu erkennen, und/oder
wobei der Prozess ferner den folgenden Schritt umfasst:
Erhalten einer Benutzereingabe von einer Eingabevorrichtung;
basierend auf der erhaltenen Benutzereingabe, Löschen des automatisch zugewiesenen Status des Gegenstands und Zuweisen eines dritten Status zu dem Gegenstand.

## Revendications

1. Système automatisé de commande d'inventaire (100) comprenant :
un ou plusieurs dispositifs de stockage (106, 106A, 106B, 106C) contenant une pluralité d'emplacements de stockage pour le stockage d'objets ;
un premier emplacement prédéfini pour recevoir un ou plusieurs objets, le premier emplacement prédéfini comportant un système de détection comprenant une ou plusieurs caméras configurées pour obtenir des images de la pluralité d'emplacements de stockage, et/ou un ou plusieurs capteurs de RF configurés pour détecter des étiquettes RFID, dans lequel le système de détection est configuré pour détecter lorsqu'un objet est déposé sur le premier emplacement prédéfini ;
un deuxième emplacement prédéfini pour recevoir un ou plusieurs objets ; le deuxième emplacement prédéfini comportant un système de détection comprenant une ou plusieurs caméras configurées pour obtenir des images de la pluralité d'emplacements de stockage, et/ou un ou plusieurs capteurs de RF configurés pour détecter des étiquettes RFID, dans lequel le système de détection est configuré pour détecter lorsqu'un objet est déposé sur le deuxième emplacement prédéfini ;
un ou plusieurs processeurs configurés pour :
lorsqu'un objet est déposé sur le premier emplacement prédéfini,
affecter automatiquement un premier statut à l'objet déclencher la transmission d'une première alerte indiquant le premier statut de l'objet déposé,
diffuser la première alerte à des utilisateurs en réponse à l'objet déposé,
dans lequel la première alerte contient des informations concernant des instructions de processus associées au premier statut affecté, et
suivre avec le système de détection une pluralité de transactions associées à l'objet déposé sur la base de données comportant des données de fourniture et de retour d'objet, des statuts d'objet, un accès utilisateur et/ou un emplacement de travail après la vérification par un utilisateur que l'objet déposé a quitté le premier emplacement prédéfini, et
lorsque l'objet est déposé sur le deuxième emplacement prédéfini,
affecter automatiquement un deuxième statut à l'objet, déclencher la transmission d'une deuxième alerte indiquant le deuxième statut de l'objet déposé, et
diffuser la deuxième alerte à des utilisateurs en réponse à l'objet déposé,
dans lequel la deuxième alerte contient des informations concernant des instructions de processus associées au deuxième statut affecté.

2. Système automatisé de commande d'inventaire selon la revendication 1, dans lequel le premier emplacement prédéfini est configuré pour permettre à l'utilisateur qui a reçu une alerte transmise indiquant un premier statut de l'objet déposé de vérifier que l'objet déposé a quitté le premier emplacement défini.

3. Système automatisé de commande d'inventaire selon la revendication 1,
dans lequel le processeur de données est configuré pour affecter automatiquement le premier statut sur la base d'informations détectées par le système de détection du premier emplacement prédéfini correspondant à l'objet déposé ;
dans lequel, en option, les informations détectées correspondent à des repères visuels sur un contenant qui contient l'objet déposé.

4. Système automatisé de commande d'inventaire selon la revendication 1, comprenant en outre :
un dispositif d'entrée configuré pour recevoir une entrée d'utilisateur ;
dans lequel le processeur de données est configuré pour affecter automatiquement le premier statut sur la base d'une entrée d'utilisateur reçue par le dispositif d'entrée ; et/ou
comprenant en outre :
un troisième emplacement prédéfini pour recevoir un ou plusieurs objets ;
dans lequel les premier et troisième emplacements prédéfinis correspondent respectivement à un statut respectif tel qu'un objet déposé sur le premier emplacement prédéfini se voit automatiquement affecter un premier statut autre que lorsqu'il est déposé sur le troisième emplacement prédéfini.

5. Système automatisé de commande d'inventaire selon la revendication 1, dans lequel les systèmes de détection des premier et deuxième emplacements prédéfinis comprennent chacun au moins un de :
une ou plusieurs connexions électriques configurées pour la connexion à des objets respectifs ;
une ou plusieurs balances configurées pour détecter des poids d'objets respectifs ;
un réseau de capteurs de contact configurés pour détecter une forme d'un objet,
un ou plusieurs capteurs à ultrasons, comprenant chacun un émetteur configuré pour émettre des ondes sonores et un détecteur configuré pour détecter des ondes sonores, ou
un ou plusieurs capteurs à induction magnétique configurés pour détecter des objets métalliques.

6. Système automatisé de commande d'inventaire selon la revendication 1, comprenant en outre un dispositif d'entrée configuré pour recevoir une entrée d'utilisateur ;
dans lequel le processeur de données est configuré en outre pour effacer, sur la base d'une entrée d'utilisateur reçue par le dispositif d'entrée, le statut automatiquement affecté de l'objet et pour affecter un troisième statut de l'objet sur la base de l'entrée d'utilisateur.

7. Procédé pour un système automatisé de commande d'inventaire, comprenant les étapes :
de stockage d'un objet dans un emplacement de stockage d'un dispositif de stockage (106, 106A, 106B, 106C) ;
de réception de l'objet dans un premier emplacement prédéfini, le premier emplacement prédéfini comportant un système de détection comprenant une ou plusieurs caméras configurées pour obtenir des images de la pluralité d'emplacements de stockage, et/ou un ou plusieurs capteurs de RF configurés pour détecter des étiquettes RFID ;
sur la base de la réception de l'objet dans le premier emplacement prédéfini, l'affectation automatique d'un premier statut à l'objet ;
la transmission d'une première alerte indiquant le premier statut de l'objet déposé ;
la diffusion de la première alerte à des utilisateurs en réponse à l'objet déposé, dans lequel la première alerte contient des informations concernant des instructions de processus associées au premier statut affecté ;
la vérification que l'objet déposé a quitté le premier emplacement prédéfini ;
le suivi avec le système de détection d'une pluralité de transactions associées à l'objet déposé sur la base de données comportant des données de fourniture et de retour d'objet, des statuts d'objet, un accès utilisateur, et/ou un emplacement de travail après la vérification par l'utilisateur que l'objet déposé a quitté le premier emplacement prédéfini ;
la réception de l'objet dans un deuxième emplacement prédéfini, le deuxième emplacement prédéfini comportant un système de détection comprenant une ou plusieurs caméras configurées pour obtenir des images de la pluralité d'emplacements de stockage, et/ou un ou plusieurs capteurs de RF configurés pour détecter des étiquettes RFID ;
sur la base de la réception de l'objet dans le deuxième emplacement prédéfini, l'affectation automatique d'un deuxième statut à l'objet ;
la transmission d'une deuxième alerte indiquant le deuxième statut de l'objet déposé ;
la distribution de la deuxième alerte à des utilisateurs en réponse à l'objet déposé, dans lequel la deuxième alerte contient des informations concernant des instructions de processus associées au deuxième statut affecté ;
la vérification que l'objet déposé a quitté le deuxième emplacement prédéfini ;
la réception de l'objet dans l'emplacement de stockage du dispositif de stockage (106, 106A, 106B, 106C).

8. Procédé selon la revendication 7, dans lequel un utilisateur reçoit l'alerte transmise indiquant le premier statut de l'objet déposé, et, en réponse à la réception de l'alerte transmise, vérifie que l'objet déposé a quitté le premier emplacement prédéfini.

9. Procédé selon la revendication 7, comprenant en outre l'étape :
de détection, sur le premier emplacement prédéfini, d'informations correspondant à l'objet déposé,
dans lequel le premier statut est automatiquement affecté sur la base des informations détectées sur le premier emplacement prédéfini ;
dans lequel, en option, les informations détectées sur le premier emplacement prédéfini correspondent à des repères visuels sur un contenant qui contient l'objet déposé.

10. Procédé selon la revendication 7, comprenant en outre l'étape :
de réception d'une entrée d'utilisateur sur un dispositif d'entrée,
dans lequel le premier statut est automatiquement affecté sur la base d'une entrée d'utilisateur reçue par le dispositif d'entrée ; et/ou
comprenant en outre l'étape :
de stockage d'un deuxième objet dans un deuxième emplacement de stockage du dispositif de stockage (106, 106A, 106B, 106C) ;
de réception du deuxième objet dans un troisième emplacement prédéfini,
de réception, dans un quatrième emplacement prédéfini, d'un objet de remplacement correspondant au deuxième objet ;
sur la base de la réception de l'objet de remplacement dans le quatrième emplacement prédéfini, l'affectation automatique d'un statut à l'objet de remplacement ;
la transmission d'une alerte indiquant le statut de l'objet de remplacement ;
la vérification que l'objet de remplacement a quitté le quatrième emplacement prédéfini ;
la réception de l'objet de remplacement dans le deuxième emplacement de stockage du dispositif de stockage (106, 106A, 106B, 106C).

11. Procédé selon la revendication 7,
dans lequel la réception de l'objet sur les premier et deuxième emplacements prédéfinis sont détectés par les systèmes de détection qui comprennent en outre chacun au moins un de :
une ou plusieurs connexions électriques configurées pour la connexion à des objets respectifs,
une ou plusieurs balances configurées pour détecter des poids des objets respectifs,
un réseau de capteurs de contact configurés pour détecter une forme d'un objet,
un ou plusieurs capteurs à ultrasons comprenant chacun un émetteur configuré pour émettre des ondes sonores et un détecteur configuré pour détecter des ondes sonores, ou
un ou plusieurs capteurs à induction magnétique configurés pour détecter des objets métalliques ; et/ou
comprenant en outre l'étape :
de réception d'une entrée d'utilisateur sur un dispositif d'entrée ;
sur la base de la réception de l'entrée d'utilisateur, d'effacement du statut automatiquement affecté de l'objet et l'affectation d'un troisième statut à l'objet.

12. Support de stockage lisible par ordinateur non transitoire stockant des instructions pouvant être exécutées pour réaliser un processus comprenant les étapes :
de détermination qu'un objet est présent dans un emplacement de stockage d'un dispositif de stockage (106, 106A, 106B, 106C) ;
de détermination que l'objet est présent dans un premier emplacement prédéfini, le premier emplacement prédéfini comportant un système de détection comprenant une ou plusieurs caméras configurées pour obtenir des images de la pluralité d'emplacements de stockage, et/ou un ou plusieurs capteurs de RF configurés pour détecter des étiquettes RFID ;
sur la base de la détermination que l'objet est présent dans le premier emplacement prédéfini,
l'affectation automatique d'un premier statut à l'objet :
le déclenchement de la transmission d'une première alerte indiquant le premier statut de l'objet déposé ; et
la diffusion de la première alerte à des utilisateurs en réponse à l'objet déposé, dans lequel la première alerte contient des informations concernant des instructions de processus associées au premier statut affecté ;
le suivi avec le système de détection d'une pluralité de transactions associées à l'objet déposé sur la base de données comportant un problème d'objet et des données de retour, des statuts d'objet, un accès d'utilisateur et/ou un emplacement de travail, après avoir vérifié que l'objet déposé a quitté le premier emplacement prédéfini ;
la détermination que l'objet est présent dans le deuxième emplacement prédéfini, le deuxième emplacement prédéfini comportant un système de détection comprenant une ou plusieurs caméras configurées pour obtenir des images de la pluralité d'emplacements de stockage, et/ou un ou plusieurs capteurs de RF configurés pour détecter des étiquettes RFID ;
sur la base de la détermination que l'objet est présent dans le deuxième emplacement prédéfini,
l'affectation automatique d'un deuxième statut à l'objet ;
le déclenchement de la transmission d'une deuxième alerte indiquant le deuxième statut de l'objet déposé ;
la diffusion de la deuxième alerte à des utilisateurs en réponse à l'objet déposé,
dans lequel la deuxième alerte contient des informations concernant des instructions de processus associées au deuxième statut affecté ;
la détermination que l'objet est présent dans l'emplacement de stockage dans le dispositif de stockage (106, 106A, 106B, 106C) après avoir vérifié que l'objet déposé a quitté le deuxième emplacement prédéfini.

13. Support selon la revendication 12, le processus comprenant en outre l'étape :
d'autorisation d'un utilisateur qui a reçu l'alerte transmise indiquant le premier statut de l'objet déposé de vérifier que l'objet déposé a quitté le premier emplacement prédéfini ;
et/ou
le processus comprenant en outre les étapes :
de réception d'informations détectées correspondant à l'objet déposé sur le premier emplacement,
dans lequel le premier statut est affecté sur la base des informations détectées ;
dans lequel, en option, les informations détectées sur le premier emplacement prédéfini correspondent à des repères visuels sur un contenant qui contient l'objet déposé ; et/ou
dans lequel le premier statut de l'objet est automatiquement affecté sur la base d'une entrée d'utilisateur reçue par un dispositif d'entrée.

14. Support selon la revendication 12, le processus comprenant en outre les étapes :
de détermination qu'un deuxième objet est présent dans un deuxième emplacement de stockage du dispositif de stockage (106, 106A, 106B, 106C) ;
de détermination que le deuxième objet est présent dans un troisième emplacement prédéfini ;
de détermination qu'un objet de remplacement correspondant au deuxième objet est présent dans un quatrième emplacement prédéfini ;
sur la base de la détermination que l'objet de remplacement est présent dans le quatrième emplacement prédéfini, l'affectation automatique d'un statut à l'objet de remplacement ;
le déclenchement de transmission d'une alerte indiquant le statut de l'objet de remplacement ;
la détermination que l'objet de remplacement est présent dans le deuxième emplacement de stockage du dispositif de stockage (106, 106A, 106B, 106C) après avoir vérifié que l'objet de remplacement a quitté le quatrième emplacement prédéfini.

15. Support selon la revendication 12,
dans lequel la détermination de l'objet sur les premier et deuxième emplacements prédéfinis se base sur des informations reçues depuis les systèmes de détection qui comprennent en outre chacun au moins un de :
une ou plusieurs connexions électriques configurées pour la connexion à des objets respectifs,
une ou plusieurs balances configurées pour détecter des poids des objets respectifs,
un réseau de capteurs de contact configurés pour détecter une forme d'un objet,
un ou plusieurs capteurs à ultrasons, comprenant chacun un émetteur configuré pour émettre des ondes sonores et un détecteur configuré pour détecter des ondes sonores, ou
un ou plusieurs capteurs à induction magnétique configurés pour détecter des objets métalliques ; et/ou
le processus comprenant en outre l'étape :
de réception d'une entrée d'utilisateur d'un dispositif d'entrée ;
sur la base de l'entrée d'utilisateur reçue, l'effacement du statut automatiquement affecté de l'objet et l'affectation d'un troisième statut à l'objet.
